# EUROPÄISCHE PATENTSCHRIFT

(11) **EP 3 342 584 B1**
(45) Veröffentlichungstag und Bekanntmachung des Hinweises auf die Patenterteilung: **03.03.2021**
(21) Anmeldenummer: 17209502.8
(22) Anmeldetag: 21.12.2017
(51) Int. Cl.: B29C 70/44

(54) **MEMBRANWERKZEUG ZUM UMFORMEN VON VERSTÄRKUNGSFASERLAGEN ZU VORUMGEFORMTEN T-FÖRMIGEN PROFILEN**
MEMBRANE TOOL FOR RESHAPING REINFORCING FIBRE LAYERS FOR PRE-SHAPED T-SHAPED PROFILES
MEMBRANE EXPANSIBLE PERMETTANT DE TRANSFORMER DES PRÉFORMES DE FIBRES DE RENFORT EN DES PROFILÉS EN FORME DE T PRÉMOULÉS

(30) Priorität: 30.12.2016 DE 102016125959
(43) Veröffentlichungstag der Anmeldung: 04.07.2018
(73) Patentinhaber: Airbus Operations GmbH, 21129 Hamburg (DE)
(72) Erfinder: Kohls, Jorve, 21129 Hamburg (DE); Gillessen, Alexander, 21129 Hamburg (DE)

(56) Entgegenhaltungen:
- EP-A1- 2 119 544
- WO-A1-96/06726
- WO-A1-2014/200675
- US-A- 5 225 016
- US-A1- 2008 115 555
- US-A1- 2012 175 049

## Beschreibung

### Gebiet der Erfindung

Die vorliegende Erfindung betrifft ein Werkzeug zum Formen eines T-förmigen Profils und/oder eines nicht ausgehärteten T-förmigen vorumgeformten Profils aus Verstärkungsfasern sowie ein Verfahren zur Herstellung solcher Profile.

### Hintergrund der Erfindung

Bei der Herstellung von Flugzeugen kommt dem Leichtbau mit Faserverbundwerkstoffen eine erhebliche Bedeutung in Hinblick auf Wirtschaftlichkeit und Einsparung von CO₂ im Betrieb eines Flugzeuges zu. Insbesondere Faserverbundwerkstoffe auf Basis von Kohlenstoffasern (CFK, CFRP) haben bei der Produktion von Flugzeugen eine erhebliche Bedeutung erlangt. Faserverbundwerkstoffen weisen Verstärkungsfasern auf, die in ein ausgehärtetes Matrixmaterial eingebettet sind. Dabei unterscheidet man die Verwendung von vorimprägnierten Fasern (Prepregs), bei denen die Fasern mit aushärtbarem Matrixmaterial (Harz) ausgerüstet sind von Trockenfasern, bei denen das aushärtbare Matrixmaterial (Harz) später zugeführt wird. Die Fasern werden meist in Form verschiedener vorgefertigter Halbzeuge verarbeitet, etwa Matten, Gewebe, Faserstränge. Ein wichtiger Verfahrensschritt ist das Umformen von flach abgelegten, also gestapelten Faserlagen in die gewünschte Halbzeuggeometrie (Pre-Formen oder Pre-Forming). Das Pre-Forming von Halbzeugen aus Verbundmaterial unterteilt sich generell in diskontinuierliche und kontinuierliche Produktionsverfahren.

Längsversteifungselemente von Flugzeugstrukturbauteilen werden auch als Stringer bezeichnet. Dies sind Verstärkungsprofile, die verschiedene Formen aufweisen und etwa Omega-, H- oder T-förmig sein können. Stringer können in Breite und Stärke variieren und der Form eines Flugzeugstrukturbauteils folgen, also dreidimensional komplex geformt sein. Dabei wird das Wort dreidimensional im Fachsprachgebrauch dann verwendet, wenn die an sich bereits dreidimensionalen Stringer nicht gerade oder linear ("zweidimensional") sind, sondern Biegungen aufweisen. T-förmige Profile weisen einen Steg und Füße auf, entsprechend dem Ab- und Querstrich des Buchstaben "T". Steg und Füße weisen dabei nicht zwingend eine rechten Winkel zueinander auf, sondern können mehr oder weniger schiefwinklig zueinander ausgerichtet sein.

Weiterhin können solche Profile aus Prepreg- oder Trockenfasermaterial hergestellt werden. Bekannt sind Roll- oder Pressformprozesse zur Herstellung vorumgeformter T-Profile. Diese Prozesse sind nicht einfach zu beherrschen, wenn Stringer mit hochkomplexen Geometrien oder sehr dicke Stringer hergestellt werden müssen, wodurch sie kostenintensiv und langsam sein können.

Die EP 1481790 A2 offenbart hierbei ein Verfahren und ein Werkzeug zum Formen von Trägern aus Kompositwerkstoffen.

In der US 006701990 B1 wird eine Maschine mit Walzen zum Formen von imprägniertem Gewebe.

EP2119544A1 offenbart ein Werkzeug zum Formen von wenigstens zwei Lagen von nicht ausgehärteten Verstärkungsfasern zu einem im Wesentlichen T-förmigen Profil umfassend ein Stegformwerkzeug und ein Umformwerkzeug, wobei das Stegformwerkzeug geeignet ist, einen ersten Teil der Lagen von Verstärkungsfasern zu fixieren und das Umformwerkzeug geeignet ist, einen zweiten Teil der Lagen von Verstärkungsfasern in zwei Bereiche zu teilen und zu formen, wobei das Stegformwerkzeug ein zweiteiliges Presswerkzeug ist, das den ersten Teil der Lagen von Verstärkungsfasern vollflächig einspannen und pressen kann und das Umformwerkzeug ein Rollenmittel zum Teilen eines zweiten Teils der Lagen von Verstärkungsfasern umfasst.

### Beschreibung der Erfindung

Es hat sich nun nach all dem für den Fachmann überraschend und nicht vorhersehbar herausgestellt, dass ein Werkzeug gemäß Anspruch 1 zum Formen von wenigstens zwei Lagen von nicht ausgehärteten Verstärkungsfasern zu einem im Wesentlichen T-förmigen Profil umfassend ein Stegformwerkzeug und ein Umformwerkzeug, wobei das Stegformwerkzeug geeignet ist, einen ersten Teil der Lagen von Verstärkungsfasern zu fixieren und das Umformwerkzeig geeignet ist, einen zweiten Teil der Lagen von Verstärkungsfasern zu in zwei Bereiche zu teilen und zu formen, wobei das Stegformwerkzeug ein zweiteiliges Presswerkzeug ist, das den ersten Teil der Lagen von Verstärkungsfasern vollflächig einspannen und pressen kann und das Umformwerkzeug ein Mittel zum Teilen eines zweiten Teils der Lagen von Verstärkungsfasern sowie eine dieses Mittel im Wesentlichen umschließende aufblasbare Membran umfasst, den Nachteilen des Standes der Technik abhilft. Dabei kann das Stegformwerkzeug die gesamte Geometrie des gewünschten Bauteils beinhalten. Das Membranwerkzeug sorgt für ein "smoothes" anschmiegen der Faserlagen und einen somit für einen sehr schonenden Umformprozess. Es können hochkomplexe, auch dreidimensionale Stringergeometrien realisiert werden. Das Werkzeug kann in einem kontinuierlichen Prozess eingesetzt werden.

Bevorzugt ist es, wenn das Stegformwerkzeug ein Heizsystem enthält, um bedarfsfalls in den Faserlagen enthaltenen Binder zu aktivieren. Dies können Heizkanäle, durch die ein Medium geleitet wird sein oder eine Beheizung durch Induktion oder Infrarotstrahlung. Weiter ist es bevorzugt, wenn bei einem erfindungsgemäßen Werkzeug das Mittel zum Teilen eines zweiten Teils der Lagen von Verstärkungsfasern ein Leitblech darstellt. Ein solches Leitblech ermöglicht zunächst die Montage der Membran und erlaubt die Trennung der freien Lagen vor dem Umformprozess. Weiter ist es bevorzugt, wenn die aufblasbare Membran wenigstens eine innere Membran aufweist. Hierdurch kann das sequentielle bzw. kontinuierliche Aufblasen der Membran vom Leitblech ausgehend zu den äußeren Fußbereichen des Stringers erreicht werden. Weiter ist es bevorzugt, wenn die innere Membran oder die inneren Membranen jeweils wenigstens ein Loch aufweisen. Dadurch kann ein Luftzugang an den inneren Kammern (die die dem Leitblech direkt anliegen) bereitgestellt werden. Durch ein oder mehrere kleine Löcher in Flussrichtung zum nächsten Membransegment kann erreicht werden, dass diese sich durch geringere Durchflussraten langsamer aufblasen. Es kann also die Gesamtmembran von innen zu den äußeren Ausläufen des Fußes hin aufgeblasen werden. In einer weiteren Ausführungsform können die Löcher zwischen den Membranen fehlen und die einzelnen Kammern der Membran weisen eigene Anschlüsse auf und können nacheinander mit temperiertem Gas wie etwa Warmluft befüllt werden. Weiter ist es somit bevorzugt, wenn durch das oder die Löcher der inneren Membran oder Membranen erwärmte Luft fließen kann. Weiter ist es besonders bevorzugt, wenn der an den Faserlagen anliegende Bereich der Membran perforiert ist. Dadurch kann temperiertes Gas zu den Faserlagen strömen und bei Bedarf den in den Faserlagen enthaltenen Binder aktivieren. Die Perforation muss andererseits so bemessen sein, dass durch Anlegen von Vakuum die Membran an das Leitblech angelegt werden kann. Weiter ist es bevorzugt, wenn die aufblasbare Membran wenigstens ein Mittel zum Beheizen der umschlossenen Luft aufweist. Alternativ kann die eingeleitete Luft beheizt werden. Weiter ist es bevorzugt, wenn neben dem Stegformwerkzeug eine Hilfsplattform angeordnet ist, die den zweiten Teil der Lagen von Verstärkungsfasern berührt. Dadurch kann beim Einlegen des Faserlagenstapels, bzw. des in zwei Hälften aufgeteilten Faserlagenstapels (Stack) dieser bis zum Eingriff des Stegformpresswerkzeuges gehalten werden. Im Anschluss kann die Plattform entfernt werden, da dann der untere Teil nicht mehr gehalten werden muss. Dieser wird im Verlauf ohnehin nach unten umgeformt, während der obere Teil vom Leitblech gehalten wird. Die Erfindung umfasst auch ein Verfahren gemäß Anspruch 8 zum Herstellen eines im Wesentlichen T-förmigen vorumgeformten Profils aus nicht ausgehärteten Verstärkungsfasern wobei ein Werkzeug nach Asnpruch 1 verwendet wird und das folgende Verfahrensschritte beinhaltet:
a) Ablegen eines Stapels aus wenigstens zwei Lagen von nicht ausgehärteten Verstärkungsfasern,
b) Fixieren eines ersten Teils des abgelegten Stapels mit einem Stegformwerkzeug unter Bildung des Steges des T-förmigen Profils,
c) Aufteilen eines zweiten Teils des abgelegten Stapels in zwei Teilstapel durch Einführen eines Umformwerkzeuges in den zweiten Teil des Stapels,
d) Formen der Füße des T-förmigen Profils durch Aufblasen der Membran. In einer weiteren Ausführungsform umfasst das Verfahren auch e) das Einleiten von Wärme (bei Trockenfasern) zur Binderaktivierung. In einer weiteren Ausführungsform können auch zwei Faserlagenstapel eingelegt werden und nach dem Einlegen des ersten das Werkzeug eingefahren werden, sodass der zweite Faserlagenstapel auf das Leitblech gelegt werden kann. Somit ist kein aufwändiges Trennen der zwei Hälften eines Faserlagenstapels nötig. Dabei ist es bevorzugt, wenn das zum Aufblasen der Membran verwendete Gas beheizt wird. Dazu kann ein beheiztes Fluid verwendet werden. Die Gesamtmembran kann im Falle der Verwendung von warmer Luft auch an der Kontaktstelle zum Material eine Perforierung aufweisen. Dadurch kann das Material von warmer Luft durchströmt werden und somit kann auch bei großen Materialstärken in den Tiefen der Binder aktiviert werden. Die Offenbarung umfasst auch ein ausgehärtetes T-förmiges Profil erhältlich durch ein solches Verfahren sofern vorimprägnierte Fasern (Prepregs) verwendet werden sowie ein noch nicht ausgehärtetes vorumgeformtes Profil, sofern Trockenfasern verwendet werden.

Die oben beschriebenen Aspekte und weitere Aspekte, Merkmale und Vorteile der Erfindung können ebenfalls aus den Beispielen der Ausführungsformen entnommen werden, welche im Folgenden unter Bezugnahme auf die anhängenden Zeichnungen beschrieben werden.

### Kurze Beschreibung der Zeichnungen

Figur 1 zeigt den zu formenden Lagenstapel und das Werkzeug vor einem Umformzyklus.
Figur 2 zeigt den zu geformten Lagenstapel und das Werkzeug nach einem Umformzyklus.

In den Figuren werden gleiche Bezugszeichen für gleiche oder zumindest ähnliche Elemente, Komponenten oder Aspekte verwendet. Es wird angemerkt, dass im Folgenden Ausführungsformen im Detail beschrieben werden, die lediglich illustrative und nicht beschränkend sind.

### Detaillierte Beschreibung von Ausführungsformen

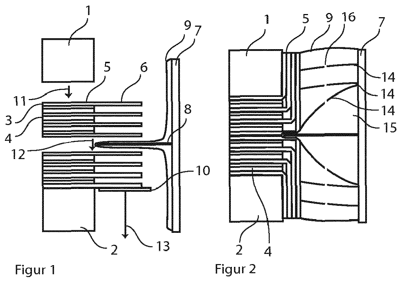

Figur 1 zeigt den zu formenden Lagenstapel und das Werkzeug vor einem Umformzyklus. Das Presswerkzeug besteht aus oberem Presswerkzeug (1) und unterem Presswerkzeug (2). Die beiden Presswerkzeuge (1) und (2) bilden zugleich das Stegformwerkzeug. Zwischen oberem und unterem Presswerkzeug (1, 2) wird der Lagenstapel so angeordnet, das ein erster Teil des Lagenstapels (5) vom Presswerkzeug fixiert wird. Ein zweiter Teil des Lagenstapels (6) ragt über das Presswerkzeug (1, 2) hinaus. Dieser Teil soll zu den Füßen des T-Profils umgeformt werden. Der Lagenstapel selbst besteht aus einzelnen Lagen (4), die nur den Steg bilden und kurz sind sowie aus längeren Lagen (3), sie sowohl Fuß, als auch Steg des T-förmigen Profils bilden. Der Fuß des T-förmigen Profils - mit anderen Worten der Querstrich des "T" wird mit Hilfe des Umformwerkzeugs aus dem zweiten Teil des Lagenstapels (6) geformt. Das Umformwerkzeug weist einen Membranträger (7), ein Leitblech (8) und eine Membran (9) auf. Vor Beginn des Umformprozesses kann die Membran (9) durch Anlegen von Vakuum am Leitblech (8) und am Membranträger (7) eng anliegen. Weiterhin kann eine Halteplatte (10) vorgesehen sein, die den zweiten Teil des Lagenstapels (6) an einer Verformung des zweiten Teils des Lagenstapels (6) durch Schwerkrafteinfluss hindert. Durch Zusammenfahren der Presswerkzeugteile (1) und (2) wird der erste Teil des Lagenstapels (5) aufeinander zu bewegt (12) und zusammengepresst. Leitblech (8) und Membran (9) werden zum Teil vom Lagenstapel umschlossen. Bevor das Umformungswerkzeug aktiviert wird, wird die Halteplatte (13) aus dem Einwirkbereich des Umformwerkzeuges entfernt (13).

Figur 2 zeigt den zu geformten Lagenstapel und das Werkzeug nach einem Umformzyklus. Zugleich sind weitere Details der Membran gezeigt. Sobald der erste Teil des Lagenstapels (5) vom Presswerkzeug (1, 2) fixiert und dadurch der Steg - mit anderen Worten der senkrechte Strich des "T"- gebildet worden ist, wird die Membran (9) mit Gas aufgeblasen. Die Membran weist wenigstens eine innere Membran (14) auf, so dass ein erstes Membransegment (15) zuerst aufgeblasen wird. Insgesamt sind hier drei innere Membranen (14) gezeigt. Das Aufblasen des ersten Membransegmentes (15) bewirkt, dass die zuvor annähernd parallel ausgerichteten Lagen des zweiten Teils des Lagenstapels (6) umgebogen und auf die freie Stirnseite des Presswerkzeuges (1, 2) gepresst werden und so die Füße des T-Profils bilden. Durch die Löcher (15) in den inneren Membranen (14) kann die Luft in die weiteren Membransegmente einströmen. Dadurch werden die Füße des T-Profils vollständig auf die freie Stirnseite des Presswerkzeuges (1, 2) gepresst. Das Presswerkzeug (1,2) kann beheizbar sein oder so ausgeführt werden, dass ein Eintrag von Wärme in das Bauteil ermöglicht wird, etwa durch Induktion oder Infrarotstrahlung. Sind die Faserlagen mit einem Binder, beispielsweise einem thermoplastischen Binder ausgerüstet, so kann zum einen durch das Presswerkzeug (1, 2) der Steg thermoplastisch fixiert werden und zum anderen durch Einblasen von geeignet temperierter Luft in die Membran (9) die Füsse des T-förmigen Profils thermoplastisch fixiert werden. Die Löcher (15) in den inneren Membranen sind dabei so bemessen, dass ein ausreichender Strom temperierten Gases, etwa Luft, das Umformwerkzeug durchströmt. Weiter kann der Teil der Membran, der mit den Füßen des T-förmigen Profils in Kontakt kommt fein perforiert sein. Dadurch kann weitere Wärme auf das vorumgeformte Profil übertragen werden, um den Binder zu aktivieren. Dabei ist die Perforation so bemessen, dass die Membran (9) erfolgreich am Leitblech (8) und Membranträger (7) fixiert werden kann, wie in Figur 1 gezeigt. Ein großer Vorteil eines solchen Werkzeuges ist, dass es sehr flexibel für alle T-Stringer anwendbar ist. Außerdem sind hier vergleichsweise kleinere Prozesszeiten zu erreichen, da der Umformprozess schnell durchgeführt werden kann und die Wärmeeinleitung durch die Perforierung besonders gut ist. Darüber hinaus handelt es sich um einen sehr unkomplizierten und einstufigen Prozess.

Während die Erfindung illustriert und beschrieben wurde im Detail in den Zeichnungen und der vorangegangenen Beschreibung, ist es beabsichtigt, dass derartige Illustrationen und Beschreibungen lediglich illustrativ oder exemplarisch und nicht restriktiv sind, so dass die Erfindung nicht durch die offenbarten Ausführungsformen beschränkt ist, da der Schutzumfang in den beigefügten Ansprüchen definiert ist. In den Ansprüchen schließt das Wort "aufweisend" nicht andere Elemente aus und der unbestimmte Artikel "ein" schließt eine Mehrzahl nicht aus.

Alleinig der Umstand, dass bestimmte Merkmale in verschiedenen abhängigen Ansprüchen genannt sind, beschränkt nicht den Gegenstand der Erfindung. Auch Kombinationen dieser Merkmale können vorteilhaft eingesetzt werden. Die Bezugszeichen in den Ansprüchen sollen nicht den Umfang der Ansprüche beschränken.

### Bezugszeichenliste

- 1: (oberes) Presswerkzeug
- 2: (unteres) Presswerkzeug
- 3: Faserlage, lang
- 4: Faserlage, kurz
- 5: Lagenstapel, erster Teil
- 6: Lagenstapel, zweiter Teil
- 7: Umformwerkzeug, Membranträger
- 8: Umformwerkzeug, Leitblech
- 9: Umformwerkzeug, Membran
- 10: Halteplatte
- 11: Bewegungsrichtung Presswerkzeug
- 12: Bewegungsrichtung Lagenstapel
- 13: Bewegungsrichtung Halteplatte
- 14: Innere Membran
- 15: Erstes Membransegment
- 16: Loch in innerer Membran

## Patentansprüche

1. Werkzeug zum Formen von wenigstens zwei Lagen von nicht ausgehärteten Verstärkungsfasern (5,6) zu einem im Wesentlichen T-förmigen Profil umfassend ein Stegformwerkzeug (1,2) und ein Umformwerkzeug (7,8,9), wobei das Stegformwerkzeug geeignet ist, einen ersten Teil der Lagen von Verstärkungsfasern (5) zu fixieren und das Umformwerkzeug geeignet ist, einen zweiten Teil der Lagen von Verstärkungsfasern (6) in zwei Bereiche zu teilen und zu formen, wobei das Stegformwerkzeug ein zweiteiliges Presswerkzeug ist, das den ersten Teil der Lagen von Verstärkungsfasern vollflächig einspannen und pressen kann und das Umformwerkzeug ein Mittel zum Teilen eines zweiten Teils der Lagen von Verstärkungsfasern sowie eine dieses Mittel im Wesentlichen umschließende aufblasbare Membran (9) umfasst.

2. Werkzeug nach Anspruch 1 **dadurch gekennzeichnet, dass** das Mittel zum Teilen eines zweiten Teils der Lagen von Verstärkungsfasern ein Leitblech (8) darstellt.

3. Werkzeug nach einem der vorangehenden Ansprüche **dadurch gekennzeichnet, dass** die aufblasbare Membran wenigstens eine innere Membran (14) aufweist.

4. Werkzeug nach einem der vorangehenden Ansprüche **dadurch gekennzeichnet, dass** die innere Membran oder die inneren Membranen jeweils wenigstens ein Loch (16) aufweisen.

5. Werkzeug nach einem der vorangehenden Ansprüche **dadurch gekennzeichnet, dass** durch das oder die Löcher (16) der inneren Membran oder Membranen (14) erwärmte Luft fließen kann.

6. Werkzeug nach einem der vorangehenden Ansprüche **dadurch gekennzeichnet, dass** die aufblasbare Membran (9) 9- wenigstens ein Mittel zum Beheizen der umschlossenen Luft aufweist.

7. Werkzeug nach einem der vorangehenden Ansprüche **dadurch gekennzeichnet, dass** neben dem Stegformwerkzeug eine Hilfsplattform (10) angeordnet ist, die den zweiten Teil der Lagen von Verstärkungsfasern berührt.

8. Verfahren zum Herstellen eines im Wesentlichen T-förmigen vorumgeformten Profils aus nicht ausgehärteten Verstärkungsfasern wobei ein Werkzeug nach einem der vorangehenden Ansprüche verwendet wird und das folgende Verfahrensschritte beinhaltet:
a) Ablegen eines Stapels aus wenigstens zwei Lagen von nicht ausgehärteten Verstärkungsfasern (5,6),
b) Fixieren eines ersten Teils (5) des abgelegten Stapels mit einem Stegformwerkzeug (1,2) unter Bildung des Steges des T-förmigen Profils,
c) Aufteilen eines zweiten Teils (6) des abgelegten Stapels in zwei Teilstapel durch Einführen eines Umformwerkzeuges (8,9) in den zweiten Teil des Stapels,
d) Formen der Füße des T-förmigen Profils durch Aufblasen der Membran (9).

9. Verfahren nach Anspruch 8 **dadurch gekennzeichnet, dass** das zum Aufblasen der Membran verwendete Gas beheizt wird.

## Claims

1. A tool for forming at least two layers of uncured reinforcing fibres (5, 6) into a substantially T-shaped profile comprising a web forming tool (1, 2) and a forming tool (7, 8, 9), wherein the web forming tool (1, 2) is adapted to fix a first part of the layers of reinforcing fibres (5) and the forming tool is adapted to to divide and form a second part of the layers of reinforcing fibres (6) into two sections, wherein the web-forming tool is a two-part pressing tool (1, 2) which can clamp and press the first part of the layers of reinforcing fibres (5) over the entire surface, and the forming tool comprises a means for dividing a second part of the layers of reinforcing fibres (6) and an inflatable membrane (9) substantially enclosing this means.

2. Tool according to claim 1, **characterised in that** the means for dividing a second part of the layers of reinforcing fibres is a baffle plate (8).

3. Tool according to any one of the preceding claims **characterized in that** said inflatable membrane comprises at least one inner membrane (14).

4. Tool according to any one of the preceding claims, **characterized in that** the inner membrane or membranes each comprise at least one hole (16).

5. Tool according to any one of the preceding claims, **characterized in that** heated air can flow through the hole or holes (16) of the inner membrane or membranes (14).

6. Tool according to any one of the preceding claims, **characterized in that** the inflatable membrane (9) comprises at least one means for heating the enclosed air.

7. Tool according to any one of the preceding claims, **characterized in that** an auxiliary platform (10) is arranged next to the web-forming tool, which platform supports the second section of the layers of reinforcing fibres.

8. A method of manufacturing a substantially T-shaped preformed profile of uncured reinforcing fibres using a tool according to any one of the preceding claims, comprising the steps of:
a) depositing a stack of at least two layers of uncured reinforcing fibres (5, 6),
b) fixing a first section (5) of the deposited stack with a web forming tool (1, 2) to form the web of the T-shaped profile,
c) dividing a second section of the deposited stack (6) into two partial stacks by inserting a forming tool (8, 9) into the second section of the stack,
d) forming the feet of the T-shaped profile by inflating the membrane (9).

9. Method according to claim (8), **characterized in that** the gas used for inflating the membrane is heated.

## Revendications

1. Outil pour former au moins deux couches de fibres de renforcement non durcies (5, 6) en un profilé sensiblement en forme de T comprenant un outil de formation de bande (1, 2) et un outil de formation (7, 8, 9), dans lequel l'outil de formation de bande (1, 2) est adapté pour fixer une première partie des couches de fibres de renforcement (5) et l'outil de formation est adapté pour diviser et former une seconde partie des couches de fibres de renforcement (6) en deux sections, dans lequel l'outil de formation de bande est un outil de pressage en deux parties (1, 2) qui peut serrer et presser la première partie des couches de fibres de renforcement (5) sur toute la surface, et l'outil de formation comprend un moyen pour diviser une deuxième partie des couches de fibres de renforcement (6) et une membrane gonflable (9) enfermant sensiblement ce moyen.

2. Outil selon la revendication 1, **caractérisé en ce que** le moyen pour diviser une deuxième partie des couches de fibres de renforcement est une plaque de déflecteur (8).

3. Outil selon l'une quelconque des revendications précédentes, **caractérisé en ce que** ladite membrane gonflable comprend au moins une membrane intérieure (14).

4. Outil selon l'une quelconque des revendications précédentes, **caractérisé en ce que** la ou les membranes intérieures comprennent chacune au moins un trou (16).

5. Outil selon l'une quelconque des revendications précédentes, **caractérisé en ce que** de l'air chauffé peut circuler à travers le ou les trous (16) de la ou des membranes intérieures (14).

6. Outil selon l'une quelconque des revendications précédentes, **caractérisé en ce que** la membrane gonflable (9) comprend au moins un moyen pour chauffer l'air enfermé.

7. Outil selon l'une quelconque des revendications précédentes, **caractérisé en ce qu'**une plate-forme auxiliaire (10) est disposée à côté de l'outil de formation de bande, laquelle plate-forme supporte la deuxième section des couches de fibres de renforcement.

8. Procédé de fabrication d'un profilé préformé sensiblement en forme de T de fibres de renforcement non durcies en utilisant un outil selon l'une quelconque des revendications précédentes, comprenant les étapes consistant à :
a) dépôt d'un empilement d'au moins deux couches de fibres de renforcement non durcies (5, 6),
b) fixer une première section (5) de la pile déposée avec un outil de formage de l'âme (1, 2) pour former l'âme du profil en T,
c) diviser une deuxième section de la pile déposée (6) en deux piles partielles en insérant un outil de formage (8, 9) dans la deuxième section de la pile,
d) former les pieds du profil en forme de T en gonflant la membrane (9).

9. Procédé selon la revendication (8), **caractérisé en ce que** le gaz utilisé pour gonfler la membrane est chauffé.
